# EUROPEAN PATENT SPECIFICATION

(11) **EP 2 152 787 B1**
(45) Date of publication and mention of the grant of the patent: **16.11.2011**
(21) Application number: 08780670.9
(22) Date of filing: 19.05.2008
(51) Int. Cl.: C08J 7/04, C23C 16/513

(54) **COATED OBJECT**
BESCHICHTETER GEGENSTAND
OBJET REVÊTU

(30) Priority: 21.05.2007 US 931057 P
(43) Date of publication of application: 17.02.2010
(73) Proprietor: Dow Global Technologies LLC, Midland, MI 48674 (US)
(72) Inventor: FISK, Thomas, E., Midland, MI 48640 (US); WARAKOMSKI, John, M., Midland, MI 48642 (US); RHOTON, Christina, A., Bentley, MI 48613 (US); VREYS, Mark, G., C., B-9041 Oostakker (BE); AERTS, Ludo, M., B-9160 Eksaarde (BE)
(74) Representative: Hull, John Philip
(86) International application number: PCT/US2008/064059
(87) International publication number: WO 2008/144615

(56) References cited:
- WO-A-2004/044039
- WO-A-2006/049865
- JP-A- 2005 088 422

## Description

### BACKGROUND OF THE INVENTION

The instant invention is in the field of objects having a coating applied thereto and more specifically the instant invention is in the field of polymer objects having a plasma generated coating applied thereto.

The use of plasma enhanced chemical vapor deposition (PECVD) techniques to coat an object with, for example, a silicon oxide layer and/or a polyorganosiloxane layer is well known as described, for example, in WO 2004/044039 A2. Japanese Patent Application number 2003-326157 having a publication number of 2005-088422 disclosed plasma coating of a 0.02 to 0.03 micrometer thick barrier layer on polyamide resin film but was silent on the degree of adhesion of the coating. Polycarbonate sheeting is widely used for glazing applications. The abrasion resistance of polycarbonate sheeting is significantly increased by the application of abrasion resistant PECVD coatings thereon. However, abrasion resistant PECVD coatings demonstrate poor adhesion to polycarbonate sheeting after exposure to adverse weather conditions. Thus, there remains a need for PECVD abrasion resistant coatings (as well as coatings having other benefits such as water wettable coatings) that are adherent to a polymer substrate even after exposure to adverse weather conditions.

### SUMMARY OF THE INVENTION

The instant invention provides a solution to the above-mentioned problems. The coatings of the coated objects of the instant invention are surprisingly adherent even after exposure to adverse weather conditions.

In one embodiment, the instant invention is a coated object, wherein at least a portion of the surface of the object comprises a polymer comprising a polymer unit comprising an amide group and wherein at least a portion of a surface of the polymer comprising a polymer unit comprising an amide group has a plasma enhanced chemical vapor deposition exposed coating thereon, the plasma enhanced chemical vapor deposition exposed coating having a thickness greater than 0.1 micrometer, wherein the polymer comprises a polymer unit comprising an amide group is selected from the group consisting of polyamides, polyurethanes, polyureas, polyisocyanurates, polyallophanates, polybiurets, polyaminoacids, N-acetyl-polyethyleneimine, N-benzoyl- polyethyleneimine, polyvinylpyrrolidones, polyacrylamides and polyimides, mixtures thereof and copolymers comprised thereof and wherein the exposed coating is a polyorganosiloxane coating comprising Si, O C and H and the exposed coating has an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

In a related embodiment, the instant invention is a method for making a coated object, wherein at least a portion of the surface of the object comprises a polymer comprising a polymer unit comprising an amide group, the method comprising the step of coating at least a portion of a surface of the polymer comprising a polymer unit comprising an amide group by a plasma enhanced chemical vapor deposition coating process to form a plasma enhanced chemical vapor deposition exposed coating thereon having a thickness greater than 0.1 micrometer, wherein the polymer comprises a polymer unit comprising an amide group is selected from the group consisting of polyamides, polyurethanes, polyureas, polyisocyanurates, polyallophanates, polybiurets, polyaminoacids, N-acetyl-polyethyleneimine, N-benzoyl- polyethylene imine, polyvinylpyrrolidones, polyacrylamides and polyimides, mixtures thereof and copolymers comprised thereof and wherein the exposed coating is a polyorganosiloxane coating comprising Si, O, C and H and the exposed coating has an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

### BRIEF DESCRIPTION OF THE DRAWINGS

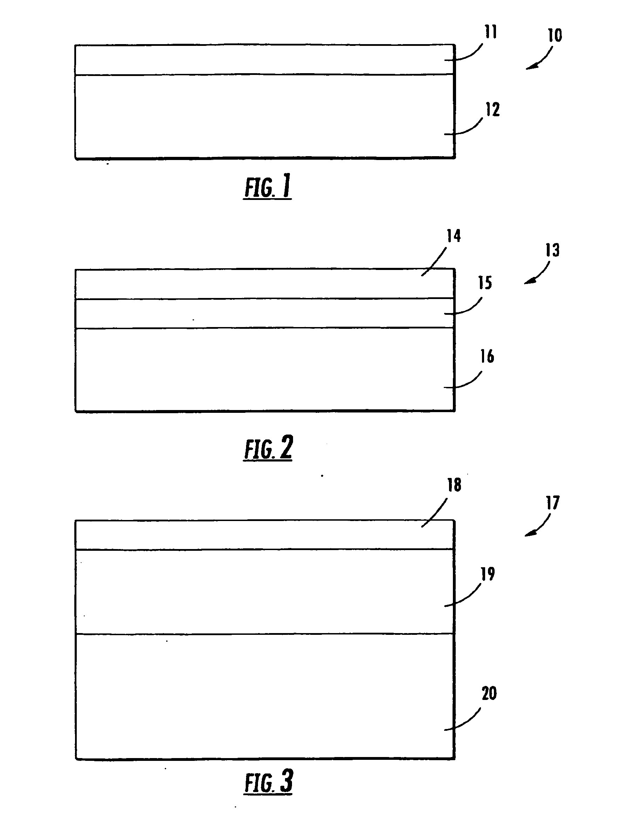

Fig. 1 is a cross-sectional view of a sheet of polymer comprising a polymer unit comprising an amide group having a plasma enhanced chemical vapor deposition exposed coating thereon;
Fig. 2 is a cross-sectional view of a sheet of polymer comprising a polymer unit comprising an amide group having interlayer and exposed plasma enhanced chemical vapor deposition coating thereon;
Fig. 3 is a cross-sectional view of a sheet of polymer comprising a polymer unit comprising an amide group laminated on one side thereof to a sheet of polymer not comprising a polymer unit comprising an amide group, the other side of the sheet of polymer comprising a polymer unit comprising an amide group having a plasma enhanced chemical vapor deposition exposed coating thereon;

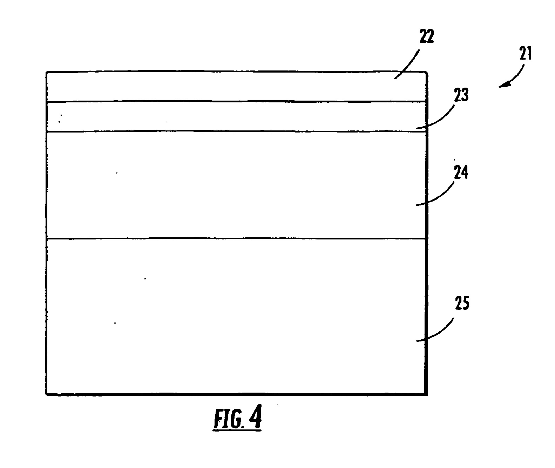

Fig. 4 shows a cross-sectional view of a structure like that shown in Fig. 3 but having a second plasma enhanced chemical vapor deposition layer positioned between the sheet of polymer comprising a polymer unit comprising an amide group and the exposed plasma enhanced chemical vapor deposition layer,

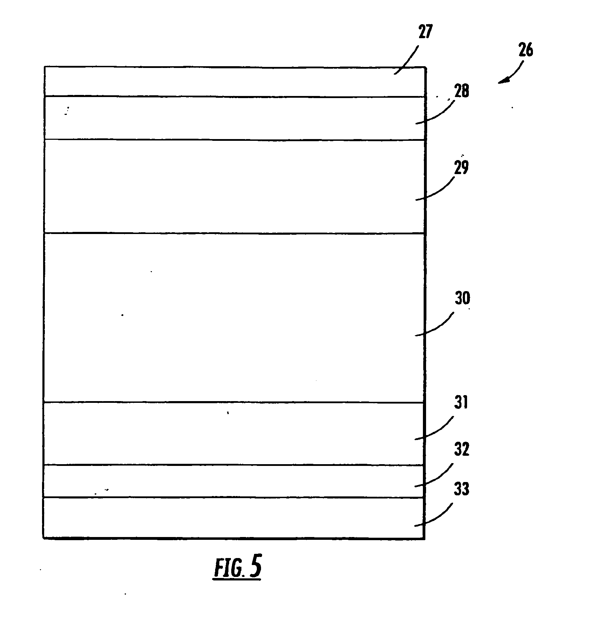

Fig. 5 shows a cross-sectional view of a multi-layer structure having interlayer and exposed plasma enhanced chemical vapor deposition coatings on both sides of a three layer polymer structure wherein the first and third layers are made of a polymer comprising a polymer unit comprising an amide group;

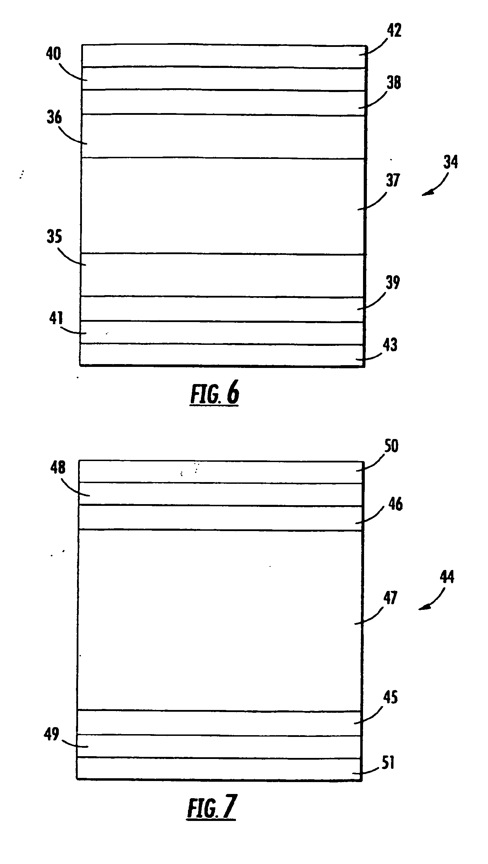

Fig. 6 shows a cross-section view of a multi-layer polycarbonate core structure having an adhesion polymer layer, a layer made of a polymer comprising a polymer unit comprising an amide group, a plasma enhanced chemical vapor deposition interlayer and an exposed plasma enhanced chemical vapor deposition coating on both sides of the structure; and
Fig. 7 shows a cross-section view of a multi-layer polycarbonate core structure having an adhesion polymer layer, a layer made of a polymer comprising a polymer unit comprising an amide group and an exposed plasma enhanced chemical vapor deposition coating on both sides of the structure.

### DETAILED DESCRIPTION

The instant invention, in one embodiment, is a coated object, wherein at least a portion of the surface of the object comprises a polymer comprising a polymer unit comprising an amide group and wherein at least a portion of a surface of the polymer comprising a polymer unit comprising an amide group has a plasma enhanced chemical vapor deposition coating thereon. The coatings of the coated objects of the instant invention are surprisingly adherent even after exposure to adverse weather conditions.

The specific plasma enhanced chemical vapor deposition technique used in the instant invention is not critical. Examples of plasma enhanced chemical vapor deposition techniques that can be used include techniques employing atmospheric as well as sub-atmospheric pressure. The plasma can be, for example and without limitation thereto, corona plasma, spark plasma, DC plasma, AC plasma (including RF plasma) and microwave plasma. Preferably, the plasma enhanced chemical vapor deposition technique used in the instant invention is atmospheric pressure plasma enhanced chemical vapor deposition. Atmospheric pressure plasma enhanced chemical vapor deposition is well known in the art as described, for example and without limitation thereto, in US Patents 6,118,218; 6441,553 and 7,064,405 as well as PCT International Publication Numbers WO2000/45623; WO2002/23960; WO2004/019381; WO2006/049794 and W02006/049865. The atmospheric pressure, square wave DC, air gap electrode system described in detail in US Provisional Patent Application Serial Number 60/849,157 is highly preferred herein.

The term "polymer unit comprising an amide group" means a polymer unit comprising a [-N-(C=O)-] group. Examples of polymers having a polymer unit comprising an amide group include, without limitation thereto, the following condensation polymers and (vinyl) addition polymers:

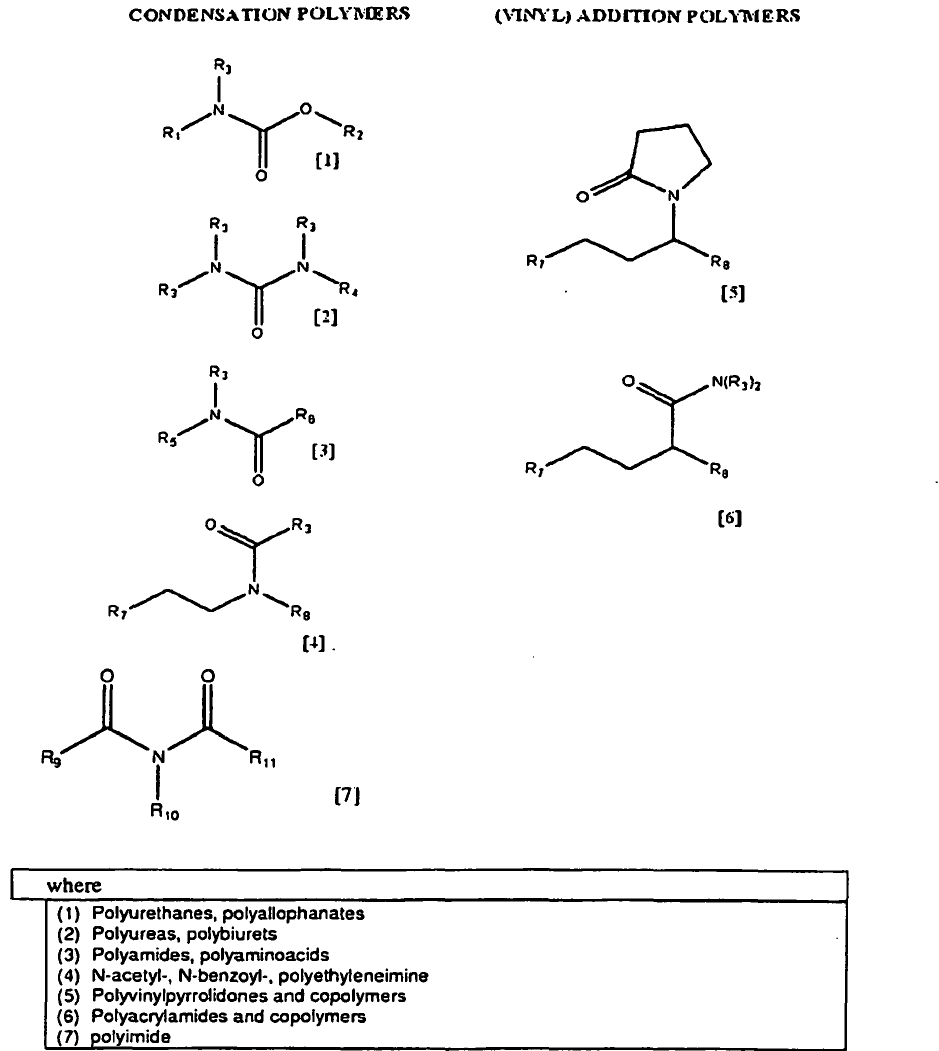

The polymer comprising a polymer unit comprising an amide group is selected from the group consisting of polymers comprising polyamide, polyurethanes, polyureas, polyisocyanurates, polyallophanates, polybiurets, polyaminoacids, N-acetyl-polyethyleneimine, N-benzoyl- polyethyleneimine, polyvinylpyrrolidones, polyacrylamides and polyimides, mixtures thereof and copolymers comprised thereof. The polymers may be thermoplastic polymers or thermoset polymers, although the thermoplastic type are preferred. Polyurethanes are a preferred polymer comprising a polymer unit comprising an amide group in the instant invention and such polyurethane can be an elastomeric, aliphatic, transparent, or thermoplastic polyurethane polymer. Examples of aliphatic monomers that can be used for synthesis of rigid engineering thermoplastic polyurethane resins in the instant invention include, without limitation thereto, the following:

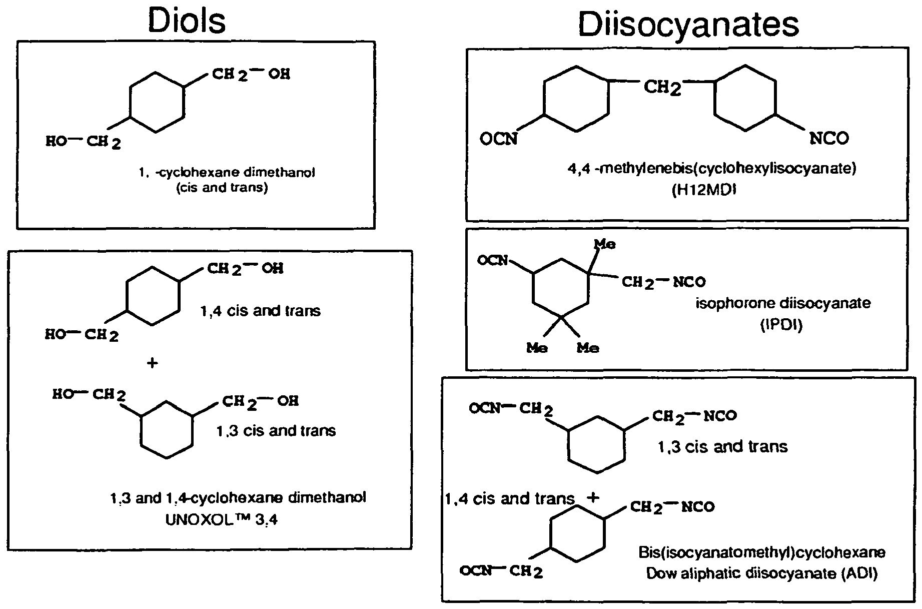

The diols and diisocyanates described above are specific examples of positional and geometric isomers of cyclohexanedimethanol and bis(isocyanatomethyl)-cyclohexane from which a polyurethane of the instant invention can be made. The meaning of the terms "positional" and "geometric" isomers herein are defined in Solomons, "Organic Chemistry," John Wiley & Sons, 1976, pages 231-232.

When the diisocyanate consists essentially of a mixture of 1,3-cis, 1,3-trans, 1,4-cis, and 1,4-trans bis(isocyanatomethyl)-cyclohexane and wherein the diol consists essentially of a mixture of 1,3-cis, 1,3-trans, 1,4-cis, and 1,4-trans cyclohexanedimethanol, then preferably the 1,3-cis content of the diisocyanate and the diol is in the range of 20 to 50 weight percent, the 1,3 trans content of the diisocyanate and the diol is in the range of 5 to 35 weight percent, the 1,4-cis content of the diisocyanate and the diol is in the range of 5 to 30 weight percent, and the 1,4-trans content of the diisocyanate and the diol is in the range of 15 to 50 weight percent. Most preferably, the 1,3-cis content of the diisocyanate and the diol is about 36 weight percent, the 1,3 trans content of the diisocyanate and the diol is about 18 weight percent, the 1,4-cis content of the diisocyanate and the diol is about 13 weight percent, and the 1,4-trans content of the diisocyanate and the diol is about 33 weight percent. Several positional and geometric isomers of cyclohexanedimethanol and bis(isocyanatomethyl)-cyclohexane are commercially available from The Dow Chemical Company (Midland, MI) and can be made according to the teachings of US Patent 6,252,121 and US Patent Application Publication 2004/0087754 .

Thermoplastic polyurethanes (TPU's) are a preferred polymer comprising a polymer unit comprising an amide group for use in the instant invention. TPU's can be placed in four classes: (a) aromatic elastomeric TPU (such as PELLETHANE^{™} TPU elastomers); (b) aromatic rigid TPU (such as ISOPLAST^{™} TPU engineering resins); (c) aliphatic elastomeric TPU (such as KRYSTALFLEX or DESMOPAN TPU elastomers); and (d) aliphatic rigid TPU. The TPU's of class (a) and (b) often need stabilization against UV degradation. For example, even though the plasma coating of the instant invention has excellent adhesion to ISOPLAST^{™} 302 TPU engineering resin even after 10 days immersion in 65°C water, significant yellowing of an unstabilized TPU is observed in less than 100 hours of UV-B exposure. The aliphatic TPU of class (c) and (d) have better natural UV stability.

Polyamide polymers, such as nylon-type polymers, are another preferred polymer comprising a polymer unit comprising an amide group for use in the instant invention. Nylon polymers may be amorphous or semicrystalline; they may also be aliphatic or aromatic. Aliphatic nylons are preferable due to improved stability under ultraviolet (UV) radiation; however, aromatic nylons may be used if they are properly stabilized against UV degradation. Amorphous nylon polymers are preferred when transparency is required. In some cases, semi-crystalline nylon polymers can be made transparent by various methods, including processing conditions, geometry, additives, and polymer chemical structure. To recap this discussion of polyamide polymers, the most preferred are aliphatic amorphous polyamides such as GRIT-AMID TR90 (EMS-Grivory). Also highly preferred are aliphatic semi-crystalline polyamide polymers such as TROGAMID CX (Evonik). This polymer, although semi-crystalline, has crystallites so small in size that visible light is not scattered, therefore transparency is maintained. Other usable examples are RISLAN Clear G350 (Arkema) and CRISTAMID MS 1700 (Arkema). Many other usable polyamides, both common and uncommon, can be found, e.g., in "Nylon Plastics Handbook" by M.I. Kohan (Hanser Publishers, c. 1995).

Preferably, the plasma enhanced chemical vapor deposition system used in the instant invention is atmospheric pressure plasma enhanced chemical vapor deposition wherein a mixture of gases including a balance gas and a working gas are flowed into a plasma to be plasma polymerized to form a coating onto a moving substrate. As used herein, the term "working gas" refers to a reactive substance, which may or may not be gaseous at standard temperature and pressure, that is capable of polymerizing in a plasma to form a coating onto the substrate. As used herein, the term "balance gas" is reactive or nonreactive gas that carries the working gas through the electrode and ultimately to the substrate.

Examples of suitable working gases (also called precursors) include organosilicon compounds such as silanes, siloxanes, and silazanes generated from the headspace of a contained volatile liquid of such material and carried by a carrier gas and merged with balance gas. Examples of silanes include dimethoxydimethylsilane, methyltrimethoxysilane, tetramethoxysilane, methyltriethoxysilane, diethoxydimethylsilane, methyltriethoxysilane, triethoxyvinylsilane, tetraethoxysilane, dimethoxymethylphenylsilane, phenyltrimethoxysilane, 3-glycidoxypropyltrimethoxysilane, 3-methacrylpropyltrimethoxysilane, diethoxymethylphenylsilane, tris(2-methoxyethoxy)vinylsilane, phenyltriethoxysilane, and dimethoxydiphenylilane. Examples of siloxanes include tetramethyldisiloxane, hexamethyldisiloxane, octamethyltrisiloxane, and tetraethylorthosilicate. Examples of silazanes include hexamethylsilazanes and tetratnethylsilazanes. Siloxanes are preferred working gases, with tetramethyldisiloxane being especially preferred.

The working gas is preferably diluted with a carrier gas such as air or nitrogen before being merged with the balance gas. The v/v concentration of the working gas in the carrier gas is related to the vapor pressure of the working gas, and is preferably not less than 1 %, more preferably not less than 5 %, and most preferably not less than 10 %; and preferably not greater than 50 %, more preferably not greater than 30 %, and most preferably not greater than 20 %. An oxidizing gas is also often flowed into the plasma enhanced chemical vapor deposition system. Some examples of oxidizing gases are air, oxygen, and nitrous oxide.

Examples of suitable balance gases include air, oxygen, nitrogen, helium, and argon, as well as combinations thereof. The flow rate of the balance gas is sufficiently high to drive the plasma polymerizing working gas to the substrate. Preferably the flow rate of the balance gas is such that the velocity of the balance gas passing through the slot of at least 1000 feet per minute (305m/min), more preferably at least 2000 feet per minute (610 m/min), and most preferably at least 4000 feet per minute (1220m/min), and preferably not greater than 10000 feet per minute (3050m/min), more preferably not greater than 8000 feet per minute (2440m/min) and most preferably not greater than 6000 feet per minute (1830m/min). Control of the relative flow rates of the balance gas and the working gas also contributes to the quality of the coating formed on the substrate. Preferably, the flow rates are adjusted such that v/v ratio of balance gas to working gas is at least 0.002 %, more preferably at least 0.02 %, and most preferably at least 0.2 %; and preferably not greater than 10 %, more preferably not greater than 6 %, and most preferably not greater than 1 %. The actual numeral values for gas injection speed, concentrations, and compositions depends, of course, on the type of coating that is being put down on the substrate as is well understood in the art. It should be understood that the use of the instant invention is not restricted to the above-mentioned values. Although it is possible to carry out the process of the present invention by applying a vacuum or partial vacuum in, for example and without limitation thereto, a corona discharge region, (i.e, the region where the corona discharge is formed) the process is preferably carried out so that the plasma is not subject to any vacuum or partial vacuum, that is, carried out at atmospheric or near atmospheric pressure.

The exposed plasma enhanced chemical vapor deposition coating of the instant invention comprises Si, O, C and H. Most preferably, the exposed plasma enhanced chemical vapor deposition coating of the instant invention has the formula Si_{1.0}O_{1.8-2.4}C_{0.3-1.0}H_{0.7-4.0}. tt can be desirable to first plasma coat a substrate with an "interlayer" having the formula Si_{1.0}O_{1.0-5.0}C_{1.0-5.0}H_{0.1-10.0}. As described in, for example, WO2006/049865, such an interlayer often imparts improved adhesion of the exposed plasma enhanced chemical vapor deposition coating to a substrate.

The exposed plasma enhanced chemical vapor deposition coating of the instant invention has an adhesion greater than or equal to 4.0 according to ASTM test D3359-02 and the adhesion is greater than or equal to 4.0 after two days preferably, four days, eight days, sixteen days or even twenty eight days or more of immersion in 65°C water and even after 200 hours, 400 hours, 1000 hours or more of UV exposure according to ASTM test D4329.

The thickness of the exposed plasma enhanced chemical vapor deposition coating of the instant invention is greater than 0.1 micrometer. Preferably, the thickness of the exposed plasma enhanced chemical vapor deposition coating of the instant invention is ) greater than 0.5 micrometer. Most preferably, the thickness of the exposed plasma enhanced chemical vapor deposition coating of the instant invention is about 1 micrometer or more. Preferably, the thickness of the exposed plasma enhanced chemical vapor deposition coating of the instant invention is 8 micrometers or less. In some embodiments, the thickness is 4 micrometers or less, more preferably 2 micrometers or less.

The polymer comprising a polymer unit comprising an amide group the instant invention can overlay a core material. Highly preferred core materials in the instant invention include polycarbonate sheet or film, polymethylmethacrylate sheet or film and polyolefin sheet or film.

Referring now to Fig. 1, therein is shown a side cross-sectional view of a coated object 10 comprised of a sheet of polymer 12 having a plasma enhanced chemical vapor deposition exposed coating 11 thereon. The polymer 12 is a polymer comprising a polymer unit comprising an amide group, such as TPU or polyamide polymer, as discussed in detail above. The plasma enhanced chemical vapor deposition coating 11 can be of any type. However, the preferred plasma enhanced chemical vapor deposition coating 11 is a coating comprising Si, C, O and H. The most preferred plasma enhanced chemical vapor deposition coating 11 is a coating having a formula of Si_{1.0}O_{1.8-2.4}C_{0.3-1.0}H_{0.7-4.0}. The coating 11 has a thickness greater than 0.1 micrometer. The coating 11 preferably has a thickness greater than 0.5 micrometers. More preferably, the thickness of the coating 11 is the range of L-20 micrometers.

Referring now to Fig. 2, therein is shown a cross-sectional side view of a coated object 13 comprised of a sheet of polymer 16 comprising a polymer unit comprising an amide group having a first 15 and second 14 plasma enhanced chemical vapor deposition coating thereon. The first plasma enhanced chemical vapor deposition coating 15 is optionally used in the instant invention as an "inter layer" and preferably has a formula of Si_{1.0}O_{1.2-5.0}C_{1.0-5.0}H_{0.1-10.0} and a thickness in the range of 0.01 to 0.1 micrometers. The second plasma enhanced chemical vapor deposition coating 14 is an "abrasion layed" preferably having the thickness discussed above in reference to Fig. 1 and comprising Si, C, O and H and most preferably having a formula of Si_{1.0}O_{1.8-2.4}C_{0.3-1.0}H_{0.7-4.0}. The use of the first layer 15 as an inter layer is preferred when the plasma deposited layer 14 does not adhere sufficiently to the polymer 16 to be coated. The use of the first layer 15 as an inter layer is usually not necessary when the substrate polymer 16 being coated is a TPU or polyamide polymer. The use of a plasma interlayer 15 to provide adhesion is usually not needed when the substrate polymer 16 is a TPU or a polyamide. If the structure shown in Figure 1 does not have good adhesion, then the structure shown in Figure 2 with a plasma interlayer should be used. In addition, the structure shown in Figure 2 may be used for insurance that good adhesion of the plasma hard coat is maintained.

Referring now to Fig. 3, therein is shown a cross-sectional side view of a coated object 17 comprised of sheet of TPU polymer 19 laminated on one side thereof to a sheet of polycarbonate polymer 20, the other side of the sheet of TPU polymer 19 having a plasma enhanced chemical vapor deposition exposed coating 18 thereon. When 20 is polycarbonate, 19 is TPU, and 18 is the plasma abrasion resistant coating: Certain TPU polymers adhere well to polycarbonate without a polymer interlayer and the plasma hard coat adheres well to the TPU without a plasma interlayer. However, in practice, due to viscosity differences, TPU cannot often be coextruded with polycarbonate. Coextrusion is the preferred practice due to low cost and ease. To apply TPU onto polycarbonate, a different method such as extrusion coating or lamination is usually preferred.

Referring now to Fig. 4, therein is shown a cross-sectional side view of a coated object 21 comprised of a sheet of polymer containing an amide group 24 laminated on one side thereof to a sheet of polycarbonate polymer 25 and coated with a first 23 and second 22 plasma enhanced chemical vapor deposition coating on the other side thereof. The first plasma enhanced chemical vapor deposition coating 23 is optionally used in the instant invention as an "inter layer" and preferably has a formula of Si_{1.0}O_{1.0-5.0}C_{1.0-5.0}H_{0.1-10.0} and a thickness in the range of 0.01 to 0.1 micrometers. The second plasma enhanced chemical vapor deposition coating 22 is an "abrasion layer" preferably having the thickness discussed above in reference to Fig. 1 and preferably comprising Si, C, O and H and most preferably having a formula of Si_{1.0}O_{1.8-2.4}C_{0.3-1.0}H_{0.7-4.0}. The use of the first layer 23 as an inter layer is preferred when the plasma deposited layer does not sufficiently adhere to the polymer 24. The use of the first layer 23 as an inter layer is usually not necessary when the substrate polymer 24 bei ng coated is a TPU or polyamide polymer.

Referring now to Fig. 5, therein is shown a cross-sectional side view of a coated object 26 comprised of a two sheets 29 and 31 of amide group containing polymer laminated to a sheet of polycarbonate polymer 30. The other side of each sheet of amide group containing polymer 29 and 31 is coated with a first 28 and 32 and second 27 and 33 plasma enhanced chemical vapor deposition coatings. The first plasma enhanced chemical vapor deposition coating 28 and 32 is optionally used in the instant invention as an "inter layer' and preferably has a formula of Si_{1.0}O_{1.0-5.0}C_{1.0-5.0}H_{0.1-10.0} and a thickness in the range of 0.01 to 0.1 micrometers. The second plasma enhanced chemical vapor deposition coating 27 and 33 is an "abrasion layer" preferably having the thickness discussed above in reference to Fig. 1 and preferably comprising Si, C, O and H and most preferably having a formula of Si_{1.0}O_{1.8-2.4}C_{0.3-1.0}H_{0.7-4.0}. The use of the first layers 28 and 32 as an inter layer is preferred when the abrasion layer 27 and 33 does not sufficiently adhere to the polymer 29 and 31 to be coated. The use of the first layers 28 and 32 as an inter layer is usually not necessary when the substrate polymer 29 and 31 being coated is a TPU or polyamide polymer. A simplified version of this structure can be made by applying layers to only one face of the core sheet 30, i.e., by eliminating layers 31, 32, and 33.

Referring now to Fig. 6, therein is shown a cross-sectional side view of a coated object 34 comprised of a two sheets 35 and 36 of an adhesion polymer (e.g., PLEXIMID 8813 polymethylmethacrylimide (Evonik)) coextruded onto a sheet of polycarbonate polymer (e.g., CALIBRE™ 302-7 polycarbonate (Dow)) 37. The other side of each sheet of polymethylmethacrylimide adhesion polymer 35 and 36 is coated with a polyamide polymer, e.g., GRILAM1D TR90 UV polyamide (EMS-Grivory) 38 and 39. The purpose of the polymethylmethacrylimide adhesion polymer layer 35 and 36 is to adhere the polyamide layer 38 and 39 to the polycarbonate layer 37. The other side of each sheet of polyamide polymer 38 and 39 is coated with a first 40 and 41 and second 42 and 43 plasma enhanced chemical vapor deposition coatings. The first plasma enhanced chemical vapor deposition coating 40 and 41 is optionally used in the instant invention as an "inter layer" and preferably has a formula of Si_{1.0}O_{1.0-5.0}C_{1.0-5.0}H_{0.1-10.0} and a thickness in the range of 0.01 to 0.1 micrometers. The second plasma enhanced chemical vapor deposition coating 42 and 43 is an "abrasion layer" preferably having the thickness discussed above in reference to Fig. 1 and preferably comprising Si, C, O and H and most preferably having a formula of Si_{1.0}O_{1.8-2.4}C_{0.3-1.0}H_{0.7-4.0}. The plasma deposited interlayer 40 and 41 is used if the abrasion layer 42 and 43 does not sufficiently adhere to the polymer substrate 38 and 39. Figure 6 describes a highly preferred structure. A simplified version of this structure can be made by applying layers to only one face of the core sheet 37, i.e., by eliminating layers 35, 39, 41, and 43.

Referring now to Fig. 7, therein is shown a cross-sectional side view of a coated object 44 comprised of a two sheets 45 and 46 of polymethylmethacrylimide adhesion layer polymer (e.g., PLEXIM)D 8813 polymethylmethacrylimide (Evonik)) laminated to a sheet of polycarbonate polymer (e.g., CALIBRE™ 302-7 polycarbonate (Dow)) 47. The other side of each sheet of polymeth ylmethacrylimide polymer 45 and 46 is coated with a polyamide polymer, e.g., GRILAMID TR90 UV polyamide (EMS-Grivory) 48 and 49. The purpose of the polytnethylmethacrylimide adhesion polymer layer 45 and 46 is to adhere the polyamide layer 48 and 49 to the polycarbonate layer 47. The other side of each sheet of polyamide polymer 48 and 49 is coated with plasma enhanced chemical vapor deposition coating 50 and 51, which is an "abrasion layer" preferably having the thickness discussed above in reference to Fig. 1 and preferably comprising Si, C, O and H and most preferably having a formula of S_{1.0}O_{1.8-2.4}C_{0.3-1.0}H_{0.7-4.0}. In this Figure, no plasma adhesion layer is required. Figure 7 describes a most preferred structure. If a polyamide is used for layers 48 and 49 on top of a polycarbonate layer 47, poor adhesion is generally obtained. Therefore, a polymeric interlayer 45 and 46 is preferably used between the polyamide and the polycarbonate. In most cases, the plasma abrasion resistant layer 50 and 51 adheres to the polyamide and no plasma interlayer is needed. A simplified version of this structure can be made by applying layers to only one face of the core sheet 47, i.e., by eliminating layers 45, 49, and 51.

The essence of this invention is described by Figure 1. Figures 2 through 7 describe variations, but the invention is not limited to these variations. For example, the structure described in Figure 1 can be extended by applying a plasma enhanced chemical vapor deposition coating to the bottom exposed face of the polymer comprising a polymer unit comprising an amide group 12. Likewise, in Figure 2, the coatings 15 and 14 can be applied to the bottom exposed face of polymer 16. Similarly in Figure 3, the coatings 19 and 18 can be applied to the bottom exposed face of polymer 20. And finally in Figure 4. the coatings 24, 23 and 22 can be applied to the bottom exposed face of polymer 25. Also, as noted in the descriptions of Figures 5, 6, and 7 above, the strictures can be simplified by applying layers to only one face of the core sheet.

### PLASMA COATING CONDITIONS AND APPARATUS

Table 1 lists the plasma coating conditions used for the examples and comparative examples hereof using the apparatus detailed in US Provisional Patent Application Serial Number 60/849,157, herein fully incorporated by reference, wherein both an interlayer (also called adhesion layer in Table 1) and an exposed coating (also called abrasion resistant layer in Table 1) is applied. For those examples where the coating is applied to a thermoplastic urethane (TPU), the inter layer is not applied.

**Table 1.Atmosphere plasma coating conditions**

| | Laver | Adhesion | Abrasion resistant | |
|---|---|---|---|---|
| | Passes under electrodes | 8 | 24 (rotate 90° after 12) | |
| | Thickness (micron) | 0.050 | 1.0 | |
| | Electrode to substrate | 20 nm | 20 nm | |
| | Air gap in electrodes | 0.036 inch (0·91mm) | 0.036 inch (0·91mm) | |
| | Precursor | Hexamethyldisiloxane (HMDSO) | Tetramethyldisiloxane (TMDSO) | |
| | Precursor flow | 750 sccm | 100 sccm | |
| | Helium ballast flow | 15 slpm | 10 slpm | |
| | Oxygen flow | 6 slpm | N/A | |
| | Air Flow | N/A | 84 slpm | |
| | Power | 0.1 kW | 1.0 kW | |
| | Electrode cooling water | 60°C | 60°C | |
| | Conveyor belt speed | 2 meters/minute | 2 meters/minute | |
| | | | | |

| | | | | |
|---|---|---|---|---|
| mm = millimeters seem = standard cubic centimeters per minute slpm = standard liters per minute kW = kilowatts | | | | |

The above procedure produces an inter layer having a formula within the following formula: Si_{1.0}O_{1.0-5.0}C_{1.0-5.0}H_{0.1-10.0}. The above procedure produces an exposed layer having a formula within the following formula: Si_{1.0}O_{1.8-2.4}C_{0.3-1.0}H_{0.7-4.0}.

### COMPARATIVE EXAMPLE 1

General purpose LEXAN polycarbonate sheet (0.25 inch thick) is cut into 4" x 4" (10·2cmx10·2cm) squares and repeatedly passed under the plasma coating electrodes. Initially, hexamethyldisiloxane (HMDSO) is used as a precursor to create a 50 nanometer thick inter layer. Then the precursor is changed to tetramethyldisiloxane (TMDSO) to create a one micron thick exposed layer. The adhesion of the plasma generated layers to the polycarbonate sheet is 4-5 according to ASTM test D3359-02 initially but 0 after one day of immersion in 65°C water. The adhesion of the plasma generated layers to the polycarbonate sheet is 4-5 according to ASTM test D3359-02 initially but 0 after 100 hours of wet UV exposure (QUV-B) according to ASTM test D4329.

### COMPARATIVE EXAMPLE 2

General purpose LEXAN polycarbonate sheet (0.25 inch thick) is cut into 4" x 4" (10·2cmx10·2cm) squares and repeatedly passed under the plasma coating electrodes. Intially, hexamethyldisiloxane (HMDSO) is used as a precursor and low power is used to create a 50 nanometer thick inter layer. Then the precursor is changed to tetramethyldisiloxane (TMDSO) and the power is increased to create a four micron thick exposed layer. The adhesion of the plasma generated layers to the polycarbonate sheet is 0 according to ASTM test D3359-02 initially. The adhesion of the plasma generated layers to the polycarbonate sheet is 0 according to ASTM test D3359-02 after 24 hours of wet UV exposure (QUV-B) according to ASTM test D4329.

### COMPARATIVE EXAMPLE 3

General purpose LEXAN polycarbonate sheet (0.25 inch thick) is cut into 4" x 4" (10·2cmx10·2cm) squares and repeatedly passed under the plasma coating electrodes. The precursor is tetramethyldisiloxane (TMDSO) to create a one micron thick exposed layer. The adhesion of the plasma generated layers to the polycarbonate sheet is 3 according to ASTM test D3359-02 initially but 0 after one day of immersion in 65°C water. The adhesion of the plasma generated layers to the polycarbonate sheet is 4-5 according to ASTM test D3359-02 initially but 0 after 100 hours of wet UV exposure (QUV-B) according to ASTM test D4329.

### EXAMPLE

A 25 mit (0·64mm) thick sheet of KRYSTALFLEX 193 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 193 thermoplastic urethane. The adhesion of the plasma generated layer to the KRYSTALFLEX 193 thermoplastic urethane is 5 according to ASTM test D3359-02 initially and still greater than 4 after ten days of immersion in 65°C water. The adhesion of the plasma generated layer to the KRYSTALFLEX 193 thermoplastic urethane is 5 according to ASTM test D3359-02 initially and still greater than 4 after 800 hours of wet UV exposure (QUV-B) according to ASTM test D4329.

A 25 mil (0·64mm) thick sheet of KRYSTALFLEX 399 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 399 thermoplastic urethane. The adhesion of the plasma generated layer to the KRYSTALFLEX 399 thermoplastic urethane is 5 according to ASTM test D3359-02 initially and 4 after two days of immersion in 65°C water. The adhesion of the plasma generated layer to the KRYSTALFLEX 399 thermoplastic urethane is 5 according to ASTM test D3359-02 initially and still greater than 4 after 800 hours of wet UV exposure (QW-B) according to ASTM test D4329.

### EXAMPLE 3

A 25 mil (0·64mm) thick sheet of KRYSTALFLEX 419 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 419 thermoplastic urethane. The adhesion of the plasma generated layer to the KRYSTALFLEX 419 thermoplastic urethane is 5 according to ASTM test D3359-02 initially and still greater than 4 after ten days of immersion in 65°C water. The adhesion of the plasma generated layer to the KRYSTALFL.EX 419 thermoplastic urethane is 5 according to ASTM test D3359-02 initially and still greater than 4 after 1000 hours of wet UV exposure (QUV-B) according to ASTM test D4329.

### EXAMPLE 4

A 25 mil (0·64mm) thick sheet of KRYSTALFLEX 419 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the KRYSTALFLEX 419 thermoplastic urethane. The adhesion of the plasma generated layer to the KRYSTALFLEX 419 thermoplastic urethane is 5 according to ASTM test D3359-02 initially and still greater than 4 after ten days of immersion in 65°C water. The adhesion of the plasma generated layer to the KRYSTALFLEX 419 thermoplastic urethane is 5 according to ASTM test D3359-02 initially and still greater than 4 after 1000 hours of wet UV exposure (QUV-B) according to ASTM test D4329.

### EXAMPLE 5

A 25 mil(0·64mm) thick sheet of KRYSTALFLEX 499 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 499 thermoplastic urethane. The adhesion of the plasma generated layer to the KRYSTALFLEX 499 thermoplastic urethane is 5 according to ASTM test D3359-02 initially and still greater than 4 after ten days of immersion in 65°C water. The adhesion of the plasma generated layer to the KRYSTALFLEX 499 thermoplastic urethane is 5 according to ASTM test D3359-02 initially and still greater than 4 after 1000 hours of wet UV exposure (QUV-B) according to ASTM test D4329.

### EXAMPLE 6

A 25 mil (0·64mm) thick sheet of KRYSTALFLEX 499 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the KRYSTALFLEX 499 thermoplastic urethane. The adhesion of the plasma generated layer to the KRYSTALFLEX 499 thermoplastic urethane is 5 according to ASTM test D3359-02 initially and still greater than 4 after ten days of immersion in 65°C water. The adhesion of the plasma generated layer to the KRYSTALFLEX 499 thermoplastic urethane is 5 according to ASTM test D3359-02 initially and still greater than 4 after 1000 hours of wet UV exposure (QUV-B) according to ASTM test D4329.

### EXAMPLE 7

A 25 mil (0·64mm) thick sheet of KRYSTALFLEX 500 thermoplastic urethane is laminated to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 500 thermoplastic urethane. The adhesion of the plasma generated layer to the KRYSTALFLEX 500 thermoplastic urethane is 3 according to ASTM test D3359-02 initially and 3 after three days of immersion in 65°C water. The adhesion of the plasma generated layer to the KRYSTALFLEX 500 thermoplastic urethane is 3 according to ASTM test D3359-02 initially and still 3 after 800 hours of wet UV exposure (QUV-B) according to ASTM test D4329.

### EXAMPLE 8

An 8 micrometer 25thick film of KRYSTALFLEX 193 thermoplastic urethane is laminated to a 0.25 inch (6·35mm) thick sheet of general purpose LEXAN polycarbonate sheet (0.25 inch thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 193 thermoplastic urethane. The adhesion of the plasma generated layer to the KRYSTALFLEX 193 thermoplastic urethane is 5 according to ASTM test D3359-02 initially and still greater than 4 after ten days of immersion in 65°C water. The adhesion of the plasma generated layer to the KRYSTALFLEX 193 thermoplastic urethane is 5 according to ASTM test D3359-02 initially and still greater than 4 after 300 hours of wet UV exposure (QUV-B) according to ASTM test D4329.

### EXAMPLE 9

An 8 micrometer thick sheet of KRYSTALFLEX 499 thermoplastic urethane is laminated to a 0.25 inch (6·35mm) thick sheet of general purpose LEXAN polycarbonate sheet (0.25 inch thick) and then cut into 4" x 4" (10·2cmx10·2cm) squares which are repeatedly passed under the plasma coating electrodes. The precursor is tetramethyldisiloxane (TMDSO) to create a one micron thick exposed layer on the KRYSTALFLEX 499 thermoplastic urethane. The adhesion of the plasma generated layer to the KRYSTALFLEX 499 thermoplastic urethane is 5 according to ASTM test D3359-02 initially and still greater than 4 after five days of immersion in 65°C water. The adhesion of the plasma generated layer to the KRYSTALFLEX 499 thermoplastic urethane is 5 according to ASTM test D3359-02 initially and still greater than 4 after 300 hours of wet UV exposure (QUV-B) according to ASTM test D4329.

### EXAMPLE 10

An 8 micrometer thick sheet of TEXIN DP7-3006 thermoplastic urethane is compression molded to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the TEXIN DP7-3006 thermoplastic urethane. The adhesion of the plasma generated layer to the TEXIN DP7-3006 thermoplastic urethane is 5 according to ASTM test D3359-02 initially and still greater than 4 after ten days of immersion in 65°C water. The adhesion of the plasma generated layer to the TEXIN DP7-3006 thermoplastic urethane is 5 according to ASTM test D3359-02 initially and still greater than 4 after 1000 hours of wet UV exposure (QUV-B) according to ASTM test D4329.

### EXAMPLE 11

An 8 micrometer thick sheet of TEXIN DP7-3006 thermoplastic urethane is compression molded to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the TEXIN DP7-3006 thermoplastic urethane. The adhesion of the plasma generated layer to the TEXIN DP7-3006 thermoplastic urethane is 5 according to ASTM test D3359-02 initially and still greater than 4 after ten days of immersion in 65°C water. The adhesion of the plasma generated layer to the TEXIN DP7-3006 thermoplastic urethane is 5 according to ASTM test D3359-02 initially and still greater than 4 after 500 hours of wet UV exposure (QUV-B) according to ASTM test D4329.

### EXAMPLE 12

A 0.125 inch (3·18mm) thick sheet of TEXIN 4215 thermoplastic urethane/polycarbonate blend is compression molded to a 0.25 inch (6·35mm) thick sheet of general purpose LEXAN polycarbonate sheet (0.25 (6·35mm) inch thick) and then cut into 4" x 4" (10·2cmx10·2cm) squares which are repeatedly passed under the plasma coating electrodes. The precursor is tetramethyldisiloxane (TMDSO) to create a one micron thick exposed layer on the TEXIN 4215 thermoplastic urethane/polycarbonate blend. The adhesion of the plasma generated layer to the TEXIN 4215 thermoplastic urethane is 5 according to ASTM test D3359-02 initially and still greater than 4 after three days of immersion in 65°C water.

### EXAMPLE 13

An 8 micrometer thick sheet of DESMOPAN DP-W-85085A thermoplastic urethane is compression molded to a 0.25 inch (6·35mm) thick sheet of general purpose LEXAN polycarbonate sheet (0.25 inch (6·35mm) thick) and then cut into 4" x 4" (10·2x10·2 cm) squares which are repeatedly passed under the plasma coating electrodes. The precursor is tetramethyldisiloxane (TMDSO) to create a one micron thick exposed layer on the DESMOPAN DP-W-85085A thermoplastic urethane. The adhesion of the plasma generated layer to the DESMOPAN DP-W-85085A thermoplastic urethane is 5 according to ASTM test D3359-02 initially and still greater than 4 after ten days of immersion in 65°C water. The adhesion of the plasma generated layer to the DESMOPAN DP-W-85085A thermoplastic urethane is 5 according to ASTM test D3359-02 initially and still greater than 4 after 1000 hours of wet UV exposure (QUV-B) according to ASTM test D4329.

### EXAMPLE 14

An 8 micrometer thick sheet of DESMOPAN DP-W-85085A thermoplastic urethane is compression molded to a 0.25 inch (6·35mm) thick sheet of general purpose LEXAN polycarbonate sheet (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the DESMOPAN DP-W-85085A thermoplastic urethane. The adhesion of the plasma generated layer to the DESMOPAN DP-W-85085A thermoplastic urethane is 5 according to ASTM test D3359-02 initially and still greater than 4 after ten days of immersion in 65°C water. The adhesion of the plasma generated layer to the DESMOPAN DP-W-85085A thermoplastic urethane is 5 according to ASTM test D3359-02 initially and still greater than 4 after 1000 hours of wet UV exposure (QUV-B) according to ASTM test D4329.

### EXAMPLE 15

A 0.25 inch (6·35mm) thick extruded sheet of ISOPLAST 302 thermoplastic urethane is cut into 4" x 4" (10·2x10·2cm) squares which are repeatedly passed under the plasma coating electrodes. The precursor is tetramethyldisiloxane (TMDSO) to create a one micron thick exposed layer on the ISOPLAST 302 thermoplastic urethane. The adhesion of the plasma generated layer to the ISOPLAST 302 thermoplastic urethane is 5 according to ASTM test D3359-02 initially and still greater than 4 after ten days of immersion in 65°C water. The adhesion of the plasma generated layer to the ISOPLAST 302 thermoplastic urethane is 5 according to ASTM test D3359-02 initially and still greater than 4 after 100 hours of wet UV exposure (QUV-B) according to ASTM test D4329.

### EXAMPLE 16

A 0.25 inch (6·35mm) thick extruded sheet of ISOPLAST 302 thermoplastic urethane is cut into 4" x 4" (10·2x10·2cm) squares which are repeatedly passed under the plasma coating electrodes. The precursor is tetramethyldisiloxane (TMDSO) to create a five micron thick exposed layer on the ISOPLAST 302. The adhesion of the plasma generated layer to the ISOPLAST 302 thermoplastic urethane is 3.5 according to ASTM test D3359-02 initially and still 3.5 after five days of immersion in 65°C water. The adhesion of the plasma generated layer to the ISOPLAST 302 thermoplastic urethane is 3.5 according to ASTM test D3359-02 initially and still 3.5 after 100 hours of wet UV exposure (QUV-B) according to ASTM test D4329.

### EXAMPLE 17

A 0.25 inch (6·35mm) thick 4" x 4" (10·2cmx10·2cm) squares of injection molded ISOPLAST 2530 rigid thermoplastic urethane is repeatedly passed under the plasma coating electrodes. The precursor is tetramethyldisiloxane (TMDSO) to create a one micron thick exposed layer on the ISOPLAST 2530 rigid thermoplastic urethane. The adhesion of the plasma generated layer to the ISOPLAST 2530 rigid thermoplastic urethane is 0 according to ASTM test D3359-02.

### EXAMPLE 18

A 0.25 inch (6·35mm) thick 4" x 4" (10·2cmx10·2cm) squares of compression molded PELLETHANE 2102-75A thermoplastic urethane is repeatedly passed under the plasma coating electrodes. The precursor is tetramethyldisiloxane (TMDSO) to create a one micron thick exposed layer on the PELLETHANE 2102-75A thermoplastic urethane. The adhesion of the plasma generated layer to the PELLETHANE 2102-75A thermoplastic urethane is 2 according to ASTM test D3359-02.

### EXAMPLE 19

Rigid engineering thermoplastic polyurethane resin is synthesized in a Haake Rheomix 3000p mixer equipped with 310 cm3 chamber and roller rotors. The reactor is heated to 170°C and rotors are set to 50 rpm. Using a plastic syringe, UNOXOL diol, supra, is added to the chamber followed by H12MDI, supra. Molar ratio of diisocyanate to diol is 1.04 : 1.00. The rotor speed is increased to 200 rpm, and 30 seconds later, two drops of T-9 stannous octoate catalyst is added and then the plunger is lowered to cover the feed port. The torque rapidly increases, then gradually decreases and levels off. After 10 minutes the rotors are turned off and the molten thermoplastic urethane (TPU) product is removed with brass spatulas, flattened on Teflon sheet, then dried overnight in a desiccating dryer. The TPU is compression molded into 4x4x0.25 inch (10·2x10·2x0·64cm) squares which are repeatedly passed under the plasma coating electrodes. The precursor is tetramethyldisiloxane (TMDSO) to create a one micron thick exposed layer on the thermoplastic urethane.

### EXAMPLE 20

A 0.125 inch (3·18mm) thick 4" x 4" (10·2cmx10·2cm) square of GRILAMID TR 90 UV aliphatic polyamide is repeatedly passed under the plasma coating electrodes. Initially, hexamethyldisiloxane (HMDSO) is used as a precursor to create a 50 nanometer thick adhesion layer on the GRILAMID TR 90 UV aliphatic polyamide. Then the precursor is changed to tetramethyldisiloxane (TMDSO) to create a one micron thick exposed layer on the adhesion layer. The adhesion of the plasma generated layer to the GRILAMID TR90 UV polyamide is 4.5 according to ASTM test D3359-02 initially and still 4.5 after seven days of immersion in 65°C water, still 4.5 after fourteen days of immersion in 65°C water, and still 4.5 after twenty-eight days of immersion in 65°C water. The adhesion of the plasma generated layer to GRILAMID TR90 UV polyamide is still 4.5 after 100 hours of wet UV exposure (QUV-B) according to ASTM test D4329.

### EXAMPLE 21

GRILAMID TR90 UV polyamide (EMS GRIVORY) is injection molded (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the GRILAMID TR90 UV polyamide. The adhesion of the plasma generated layer to the GRILAMID TR90 UV polyamide is 4.5 according to ASTM test D3359-02 initially and still 4.5 after seven days of immersion in 65°C water, still 4.5 after fourteen days of immersion in 65°C water, and still 4.5 after twenty-eight days of immersion in 65°C water. The adhesion of the plasma generated layer to GRILAMID TR90 UV polyamide is still 4.5 after 100 hours of wet UV exposure (QUV-B) according to ASTM test D4329.

### EXAMPLE 22

GRILAMID TR90 UV polyamide (EMS GRIVORY) is injection molded (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the GRILAMID TR90 UV polyamide. The adhesion of the plasma generated layer to the GRILAMED TR90 UV polyamide is 4.5 according to ASTM test D3359-02 initially and still 4.5 after seven days of immersion in 65°C water, and still 4.5 after fourteen days of immersion in 65°C water.

### EXAMPLE 23

TROGAMID CX7323 polyamide (Evonik) is injection molded (0.25 inch (6.35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the TROGAMID CX7323 polyamide. The adhesion of the plasma generated layer to the TROGAMID CX7323 polyamide is 4.5 according to ASTM test D3359-02 initially and still 4.5 after seven days of immersion in 65°C water, and still 4.5 after fourteen days of immersion in 65°C water.

### EXAMPLE 24

CRISTAMID 1700 polyamide (Arkema) is injection molded (0.25 inch (6·5mm) thick) and then cut into 4" x 4" (10·2x10·2cm) squares which are repeatedly passed under the plasma coating electrodes. The precursor is tetramethyldisiloxane (TMDSO) to create a five micron thick exposed layer on the CRISTAMID 1700 polyamide. The adhesion of the plasma generated layer to the CRISTAMID 1700 polyamide is 4.5 according to ASTM test D3359-02 initially and still 4.5 after seven days of immersion in 65°C water, and drops to 0 after fourteen days of immersion in 65°C water.

### EXAMPLE 25

RISLAN CLEAR G350 (Arkema) is injection molded (0.25 inch (6·35mm) thick) and then cut into 4" x 4" (10·2cmx10·2cm) squares which are repeatedly passed under the plasma coating electrodes. The precursor is tetramethyldisiloxane (TMDSO) to create a five micron thick exposed layer on the RISLAN CLEAR G350 polyamide. The adhesion of the plasma generated layer to the RISLAN CLEAR G350 polyamide is 4.5 according to ASTM test D3359-02 initially and still 4.5 after seven days of immersion in 65°C water, and still 4.5 after fourteen days of immersion in 65°C water.

### EXAMPLE 26

Nylon 66 polyamide (Sigma Aldrich) is compression molded (0.125 inch (3·18mm) thick) and then cut into 4" x 4" (10·2cmx10·2cm) squares which are repeatedly passed under the plasma coating electrodes. The precursor is tetramethyldisiloxane (TMDSO) to create a one micron thick exposed layer on the Nylon 66 polyamide. The adhesion of the plasma generated layer to Nylon 66 polyamide is 4.5 according to ASTM test D3359-02 initially and still 4.5 after seven days of immersion in 65°C water, and still 4.5 after fourteen days of immersion in 65°C water.

### EXAMPLE 27

CALIBRE™ 302-7 polycarbonate (Dow) sheet (0.8 mm) is extruded from a Reifenhauser 70 mm extruder. On top of this is coextruded PLEXIMID 8813 polymethylmethacrylimide (Evonik) film (ca. 100 micron +/-50 micron) from a Scamia 35 mm extruder. On top of this is coextruded GRILAMID TR90 UV polyamide. (EMS GRIVORY) film (ca. 100 micron +/-50 micron) from a Scamia 45 mm extruder. The three layer sheet is cut into 4" x 4" (10·2cmx10·2cm) squares which are repeatedly passed under the plasma coating electrodes. The precursor is tetramethyldisiloxane (TMDSO) to create a one micron thick exposed layer on the GRILAMID TR90 UV polyamide. The adhesion of the plasma generated layer to GRELAMED TR90 UV polyamide is at least 4.0 according to ASTM test D3359-02 initially and still at least 4.0 after seven days of immersion in 65°C water, and 4.0 after twenty eight days of immersion in 65°C water.

### EXAMPLE 28

CALIBRE""' 302-7 polycarbonate (Dow) sheet (0.8 mm) is extruded from a Reifenhauser 70 mm extruder. On top of this is coextruded PLEXIMID 8813 polymethylmethacrylimide (Evonik) film (ca. 100 micron +/-50 micron) from a Scamia 35 mm extruder. On top of this is coextruded TROGAMID CX7323 polyamide (Evonik) film (ca. 100 micron +/-50 micron) from a Scamia 45 mm extruder. The three layer sheet is cut into 4" x 4" (10·2cmx10·2cm) squares which are repeatedly passed under the plasma coating electrodes. The precursor is tetramethyldisiloxane (TMDSO) to create a one micron thick exposed layer on the TROGAMID CX7323 polyamide. The adhesion of the plasma generated layer to TROGAMID CX7323 polyamide is at least 4.0 according to ASTM test D3359-02 initially and still at least 4.0 after seven days of immersion in 65°C water, and 4.0 after twenty eight days of immersion in 65°C water.

### EXAMPLE 29

CALIBRE™ 302-7 polycarbonate (Dow) sheet (0.8 mm) is extruded from a Reifenhauser 70 mm extruder. On top of this is coextruded PLEXIMID 8813 polymethylmethacrylimide (Evonik) film (ca. 100 micron +/-50 micron) from a Scamia 35 mm extruder. The two layer sheet is cut into 4" x 4" (10·2cmx10·2cm) squares which are repeatedly passed under the plasma coating electrodes. The precursor is tetramethyldisiloxane (TMDSO) to create a one micron thick exposed layer on the PLEXIMID 8813 polymethylmethacrylimide. The adhesion of the plasma generated layer to PLEXIMID 8813 polymethylmethacrylimide is at least 4.0 according to ASTM test D3359-02 initially but decreases to 2.0 after seven days of immersion in 65°C water.

### EXAMPLE 30

CALIBRETM 302-7 polycarbonate (Dow) sheet (0.8 mm) is extruded from a Reifenhauser 70 mm extruder. On top of this is coextruded PLEXIMID 8813 polymethylmethacrylimide (Evonik) film (ca. 100 micron +/-50 micron) from a Scamia 35 mm extruder. On top of this is coextruded GRILAMID TR90 UV polyamide (EMS GRIVORY) film (ca. 100 micron +/-50 micron) from a Scamia 45 mm extruder. The three layer sheet is cut into 4" x 4" (10·2cmx10·2cm) squares which are repeatedly passed under the plasma coating electrodes. Initially, hexamethyldisiloxane (HMDSO) is used as a precursor to create a 50 nanometer thick inter layer. Then the precursor is changed to tetramethyldisiloxane (TMDSO) to create a one micron thick exposed layer on the GRILAMID TR90 UV polyamide. The adhesion of the plasma generated layer to GRILAMID TR90 UV polyamide is at least 4.0 according to ASTM test D3359-02 initially and still at least 4.0 after seven days of immersion in 65°C water, and 4.0 after twenty eight days of immersion in 65°C water.

### EXAMPLE 31

CALIBRE™ 302-7 polycarbonate (Dow) sheet (0.8 mm) is extruded from a Reifenhauser 70 mm extruder. On top of this is coextruded PLEXIMID 8813 polymethylmethacrylimide (Evonik) film (ca. 100 micron +/-50 micron) from a Scamia 35 mm extruder. On top of this is coextruded TROGAMID CX7323 polyamide (Evonik) film (ca. 100 micron +/-50 micron) from a Scamia 45 mm extruder. The three layer sheet is cut into 4" x 4" (10·2cmx10·2cm) squares which are repeatedly passed under the plasma coating electrodes. Initially, hexamethyldisiloxane (HMDSO) is used as a precursor to create a 50 nanometer thick inter layer. Then the precursor is changed to tetramethyldisiloxane (TMDSO) to create a one micron thick exposed layer on the TROGAMID CX7323 polyamide. The adhesion of the plasma generated layer to TROGAMID CX7323 polyamide is at least 4.0 according to ASTM test D3359-02 initially and still at least 4.0 after seven days of immersion in 65°C water, and 4.0 after twenty eight days of immersion in 65°C water.

### EXAMPLE 32

CALIBRE™ 302-7 polycarbonate (Dow) sheet (0.8 mm) is extruded from a Reifenhauser 70 mm extruder. On top of this is coextruded PLEXIMID 8813 polymethylmethacrylimide (Evonik) film (ca. 100 micron +/-50 micron) from a Scamia 35 mm extruder. The two layer sheet is cut into 4" x 4" (10·2cmx10·2cm) squares which are repeatedly passed under the plasma coating electrodes. Initially, hexamethyldisiloxane (HMDSO) is used as a precursor to create a 50 nanometer thick inter layer. Then the precursor is changed to tetramethyldisiloxane (TMDSO) to create a one micron thick exposed layer on the PLEXIMID 8813 polymethylmethacrylimide. The adhesion of the plasma generated layer to PLEXIMID 8813 polymethylmethacrylimide is at least 4.0 according to ASTM test D3359-02 initially but decreases to 1.0 after seven days of immersion in 65°C water.

## Claims

1. A coated object, wherein at least a portion of the surface of the object comprises a polymer comprising a polymer unit comprising an amide group and wherein at least a portion of a surface of the polymer comprising a polymer unit comprising an amide group has a plasma enhanced chemical vapor deposition exposed coating thereon, the plasma enhanced chemical vapor deposition exposed coating having a thickness greater than 0.1 micrometer, wherein the polymer comprising a polymer unit comprising an amide group is selected from the group consisting of polyamides, polyurethanes, polyureas, polyisocyanurates, polyallophanates, polybiurets, polyaminoacids, N-acetyl-polyethyleneimine, N-benzoyl-polyethyleneimine, polyvinylpyrrolidones, polyacrylamides and polyimides, mixtures thereof and copolymers comprised thereof and wherein the exposed coating is a polyorganosiloxane coating comprising Si, O, C and H and the exposed coating has an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

2. The coated object of Claim 1, further comprising a plasma enhanced chemical vapor deposition interlayer coating between the object and the exposed coating, the exposed and interlayer coatings each comprising Si, O, C and H.

3. The coated object of Claim 2, wherein the coating has an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

4. The coated object of Claim 2, wherein the coatings have an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

5. The coated object of Claim 1, wherein the coated object comprises a sheet of a polymer having at least one polymer layer thereon comprising a polymer unit comprising an amide group.

6. The coated object of Claim 5, wherein the exposed coating has an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

7. A method for making a coated object, wherein at least a portion of the surface of the object comprises a polymer comprising a polymer unit comprising an amide group, the method comprising the step of coating at least a portion of a surface of the polymer comprising a polymer unit comprising an amide group by a plasma enhanced chemical vapor deposition coating process to form a plasma enhanced chemical vapor deposition exposed coating thereon having a thickness greater than 0.1 micrometer, wherein the polymer comprising a polymer unit comprising an amide group is selected from the group consisting of polyamides, polyurethanes, polyureas, polyisocyanurates, polyallophanates, polybiurets, polyaminoacids, N-acetyl-polyethyleneimine, N-benzoyl- polyethyleneimine, polyvinylpyrrolidones, polyacrylamides and polyimides, mixtures thereof and copolymers comprised thereof and wherein the exposed coating is a polyorganosiloxane coating comprising Si, O, C and H and the exposed coating has an adhesion to the polymer comprising a polymer unit comprising an amide group greater than or equal to 4.0 according to ASTM test D3359-02 and the adhesion is greater than or equal to 4.0 after two days of immersion in 65°C water and 200 hours of UV exposure according to ASTM test D4329.

8. The method of Claim 7, wherein the plasma enhanced chemical vapor deposition coating process is an atmospheric pressure plasma enhanced chemical vapor deposition coating process.

## Patentansprüche

1. Beschichteter Gegenstand, wobei wenigstens ein Abschnitt der Oberfläche des Gegenstands ein Polymer mit einer eine Amidgruppe umfassenden Polymereinheit umfasst und wobei wenigstens ein Abschnitt einer Oberfläche des Polymers mit einer eine Amidgruppe umfassenden Polymereinheit eine durch plasmaunterstützte chemische Gasphasenabscheidung aufgebrachte Beschichtung aufweist, wobei die durch plasmaunterstützte chemische Gasphasenabscheidung aufgebrachte Beschichtung eine Dicke größer als 0,1 Mikrometer besitzt, wobei das Polymer, das eine eine Amidgruppe umfassende Polymereinheit umfasst, aus der aus Polyamiden, Polyurethanen, Polyharnstoffen, Polyisocyanuraten, Polyallophanaten, Polybiureten, Polyaminosäuren, N-Acetyl-polyethylenimin, N-Benzoyl-polyethylenimin, Polyvinylpyrrolidonen, Polyacrylamiden und Polyimiden, Mischungen davon und daraus bestehenden Copolymeren bestehenden Gruppe ausgewählt ist und wobei die aufgebrachte Beschichtung eine Si, O, C und H umfassende Polyorganosiloxanbeschichtung ist und die aufgebrachte Beschichtung eine Haftung an dem Polymer, das eine eine Amidgruppe umfassende Polymereinheit umfasst, von größer oder gleich 4,0 gemäß dem ASTM-Test D3359-02 besitzt und die Haftung nach zweitägigem Eintauchen in 65°C warmem Wasser und 200 Stunden UV-Bestrahlung gemäß dem ASTM-Test D4329 größer oder gleich 4,0 beträgt.

2. Beschichteter Gegenstand nach Anspruch 1, der ferner eine durch plasmaunterstützte chemische Gasphasenabscheidung aufgebrachte Zwischenschicht zwischen dem Gegenstand und der aufgebrachten Beschichtung umfasst, wobei die aufgebrachte Beschichtung und die Zwischenschicht jeweils Si, O, C und H umfasst.

3. Beschichteter Gegenstand nach Anspruch 2, wobei die Beschichtung eine Haftung an dem Polymer, das eine eine Amidgruppe umfassende Polymereinheit umfasst, von größer oder gleich 4,0 gemäß dem ASTM-Test D3359-02 besitzt und die Haftung nach zweitägigem Eintauchen in 65°C warmem Wasser und 200 Stunden UV-Bestrahlung gemäß dem ASTM-Test D4329 größer oder gleich 4,0 beträgt.

4. Beschichteter Gegenstand nach Anspruch 2, wobei die Beschichtungen eine Haftung an dem Polymer, das eine eine Amidgruppe umfassende Polymereinheit umfasst, von größer oder gleich 4,0 gemäß dem ASTM-Test D3359-02 besitzen und die Haftung nach zweitägigem Eintauchen in 65°C warmem Wasser und 200 Stunden UV-Bestrahlung gemäß dem ASTM-Test D4329 größer oder gleich 4,0 beträgt.

5. Beschichteter Gegenstand nach Anspruch 1, wobei der beschichtete Gegenstand eine Folie aus einem Polymer umfasst, auf der sich mindestens eine Polymerschicht befindet, die eine eine Amidgruppe umfassende Polymereinheit umfasst.

6. Beschichteter Gegenstand nach Anspruch 5, wobei die aufgebrachte Beschichtung eine Haftung an dem Polymer, das eine eine Amidgruppe umfassende Polymereinheit umfasst, von größer oder gleich 4,0 gemäß dem ASTM-Test D3359-02 besitzt und die Haftung nach zweitägigem Eintauchen in 65°C warmem Wasser und 200 Stunden UV-Bestrahlung gemäß dem ASTM-Test D4329 größer oder gleich 4,0 beträgt.

7. Verfahren zur Herstellung eines beschichteten Gegenstands, wobei wenigstens ein Abschnitt der Oberfläche des Gegenstands ein Polymer mit einer eine Amidgruppe umfassenden Polymereinheit umfasst, wobei das Verfahren den Schritt des Beschichtens wenigstens eines Abschnitts einer Oberfläche des Polymers mit einer eine Amidgruppe umfassenden Polymereinheit durch ein Beschichtungsverfahren mit plasmaunterstützter chemischer Gasphasenabscheidung umfasst, um darauf eine durch plasmaunterstützte chemische Gasphasenabscheidung aufgebrachte Beschichtung mit einer Dicke größer als 0,1 Mikrometer zu bilden, wobei das Polymer, das eine eine Amidgruppe umfassende Polymereinheit umfasst, aus der aus Polyamiden, Polyurethanen, Polyharnstoffen, Polyisocyanuraten, Polyallophanaten, Polybiureten, Polyaminosäuren, N-Acetyl-polyethylenimin, N-Benzoyl-polyethylenimin, Polyvinylpyrrolidonen, Polyacrylamiden und Polyimiden, Mischungen davon und daraus bestehenden Copolymeren bestehenden Gruppe ausgewählt ist und wobei die aufgebrachte Beschichtung eine Si, O, C und H umfassende Polyorganosiloxanbeschichtung ist und die aufgebrachte Beschichtung eine Haftung an dem Polymer, das eine eine Amidgruppe umfassende Polymereinheit umfasst, von größer oder gleich 4,0 gemäß dem ASTM-Test D3359-02 besitzt und die Haftung nach zweitägigem Eintauchen in 65°C warmem Wasser und 200 Stunden UV-Bestrahlung gemäß dem ASTM-Test D4329 größer oder gleich 4,0 beträgt.

8. Verfahren nach Anspruch 7, wobei das Beschichtungsverfahren mit plasmaunterstützter chemischer Gasphasenabscheidung ein bei Atmosphärendruck durchgeführtes Beschichtungsverfahren mit plasmaunterstützter chemischer Gasphasenabscheidung ist.

## Revendications

1. Objet revêtu, dans lequel au moins une partie de la surface de l'objet comprend un polymère comportant un motif de polymère comprenant un groupe amide, dans lequel au moins une partie d'une surface en ce polymère comportant un motif de polymère comprenant un groupe amide porte sur elle un revêtement exposé, formé par dépôt chimique en phase vapeur assisté par plasma, lequel revêtement exposé, formé par dépôt chimique en phase vapeur assisté par plasma, est épais de plus de 0,1 micromètre, pour lequel le polymère comportant un motif de polymère comprenant un groupe amide est choisi dans l'ensemble constitué par les polyamides, polyuréthanes, polyurées, polyisocyanurates, polyallophanates, polybiurets, poly(acide aminé), N-acétyl-poly(éthylène-imine), N-benzoyl-poly(éthylène-imine), poly-(vinyl-pyrrolidone), polyacrylamides et polyimides, les mélanges de tels polymères et les copolymères formés de tels polymères, et dans lequel le revêtement exposé est un revêtement de polyorganosiloxane comprenant du silicium, de l'oxygène, du carbone et de l'hydrogène, et ce revêtement exposé adhère au polymère comportant un motif de polymère comprenant un groupe amide avec un degré d'adhérence qui, mesuré selon le test de la norme ASTM D-3359-02, est supérieur ou égal à 4,0, lequel degré d'adhérence, mesuré après deux jours d'immersion dans de l'eau à 65 °C et 200 heures d'exposition aux rayons UV selon le test de la norme ASTM D-4329, est supérieur ou égal à 4,0.

2. Objet revêtu conforme à la revendication 1, qui comporte en outre, entre l'objet et le revêtement exposé, un revêtement intermédiaire formé par dépôt chimique en phase vapeur assisté par plasma, le revêtement exposé et le revêtement intermédiaire comprenant chacun du silicium, de l'oxygène, du carbone et de l'hydrogène.

3. Objet revêtu conforme à la revendication 2, dans lequel le revêtement adhère au polymère comportant un motif de polymère comprenant un groupe amide avec un degré d'adhérence qui, mesuré selon le test de la norme ASTM D-3359-02, est supérieur ou égal à 4,0, lequel degré d'adhérence, mesuré après deux jours d'immersion dans de l'eau à 65 °C et 200 heures d'exposition aux rayons UV selon le test de la norme ASTM D-4329, est supérieur ou égal à 4,0.

4. Objet revêtu conforme à la revendication 2, dans lequel les revêtements adhèrent au polymère comportant un motif de polymère comprenant un groupe amide avec un degré d'adhérence qui, mesuré selon le test de la norme ASTM D-3359-02, est supérieur ou égal à 4,0, lequel degré d'adhérence, mesuré après deux jours d'immersion dans de l'eau à 65 °C et 200 heures d'exposition aux rayons UV selon le test de la norme ASTM D-4329, est supérieur ou égal à 4,0.

5. Objet revêtu conforme à la revendication 1, lequel objet revêtu comprend une feuille de polymère qui porte sur elle au moins une couche de polymère comportant un motif de polymère comprenant un groupe amide.

6. Objet revêtu conforme à la revendication 5, dans lequel le revêtement exposé adhère au polymère comportant un motif de polymère comprenant un groupe amide avec un degré d'adhérence qui, mesuré selon le test de la norme ASTM D-3359-02, est supérieur ou égal à 4,0, lequel degré d'adhérence, mesuré après deux jours d'immersion dans de l'eau à 65 °C et 200 heures d'exposition aux rayons UV selon le test de la norme ASTM D-4329, est supérieur ou égal à 4,0.

7. Procédé de fabrication d'un objet revêtu dans lequel au moins une partie de la surface de l'objet comprend un polymère comportant un motif de polymère comprenant un groupe amide, lequel procédé comprend une étape consistant à revêtir au moins une partie d'une surface en ce polymère comportant un motif de polymère comprenant un groupe amide, selon un procédé de revêtement par dépôt chimique en phase vapeur assisté par plasma, de manière à former là-dessus un revêtement exposé, formé par dépôt chimique en phase vapeur assisté par plasma, épais de plus de 0,1 micromètre, dans lequel procédé le polymère comportant un motif de polymère comprenant un groupe amide est choisi dans l'ensemble constitué par les polyamides, polyuréthanes, polyurées, polyisocyanurates, polyallophanates, polybiurets, poly(acide aminé), N-acétyl-poly(éthylène-imine), N-benzoylpoly(éthylène-imine), poly(vinyl-pyrrolidone), polyacrylamides et polyimides, les mélanges de tels polymères et les copolymères formés de tels polymères, et dans lequel procédé le revêtement exposé est un revêtement de polyorganosiloxane comprenant du silicium, de l'oxygène, du carbone et de l'hydrogène, ce revêtement exposé adhérant au polymère comportant un motif de polymère comprenant un groupe amide avec un degré d'adhérence qui, mesuré selon le test de la norme ASTM D-3359-02, est supérieur ou égal à 4,0, lequel degré d'adhérence, mesuré après deux jours d'immersion dans de l'eau à 65 °C et 200 heures d'exposition aux rayons UV selon le test de la norme ASTM D-4329, est supérieur ou égal à 4,0.

8. Procédé conforme à la revendication 7, dans lequel le procédé de revêtement par dépôt chimique en phase vapeur assisté par plasma est un procédé de revêtement par dépôt chimique en phase vapeur assisté par plasma sous pression atmosphérique.
